# EUROPÄISCHE PATENTSCHRIFT

(11) **EP 4 540 112 B1**
(45) Veröffentlichungstag und Bekanntmachung des Hinweises auf die Patenterteilung: **02.09.2026**
(21) Anmeldenummer: 23727349.5
(22) Anmeldetag: 17.05.2023
(51) Int. Cl.: B60T 8/172, B60W 30/18, B60W 30/188

(54) **VERFAHREN SOWIE EINRICHTUNG ZUR BESTIMMUNG EINES MOTOR-REFERENZMOMENTS EINES KRAFTFAHRZEUGS**
METHOD AND DEVICE FOR DETERMINING A MOTOR REFERENCE TORQUE OF A MOTOR VEHICLE
PROCÉDÉ ET DISPOSITIF POUR DÉTERMINER UN COUPLE DE RÉFÉRENCE DE MOTEUR D'UN VÉHICULE À MOTEUR

(30) Priorität: 20.06.2022 DE 102022115221
(43) Veröffentlichungstag der Anmeldung: 23.04.2025
(73) Patentinhaber: ZF CV Systems Europe BV, 1170 Brüssel (BE)
(72) Erfinder: BINDER, Hartmut, 30657 Hannover (DE); KNOSMANN, Michael, 30455 Hannover (DE); SWAID, Youssef, 30419 Hannover (DE)
(74) Vertreter: Rabe, Dirk-Heinrich
(86) Internationale Anmeldenummer: PCT/EP2023/063210
(87) Internationale Veröffentlichungsnummer: WO 2023/247116

(56) Entgegenhaltungen:
- WO-A2-2015/004639
- DE-A1- 102013 008 839
- DE-A1- 19 728 867
- DE-T5- 112011 104 629

## Beschreibung

Die Erfindung betrifft ein Verfahren sowie eine Einrichtung zum Bestimmen des in einem Steuergerät eines Kraftfahrzeugs verwendeten Motor-Referenzmoments seines Motors sowie ein Steuergerät eines Bremssystems eines Kraftfahrzeugs mit einer derartigen Einrichtung und/oder mit Hardware- und/oder Softwaremodulen zur Durchführung der Schritte eines derartigen Verfahrens.

In herkömmlichen Nutzfahrzeugen sind oftmals Antiblockiersysteme (ABS) oder elektronische Bremssysteme (EBS) verbaut, die einen Wert für das Motor-Referenzmoment (bzw. Motor-Maximalmoment) für interne Berechnungen, bspw. für eine Motor-Schleppmoment-Regelung (SMR), verwenden. Der Wert für das Motor-Referenzmoment wird oftmals vom Motorsteuergerät des Fahrzeugs oder von seinem Getriebesteuergerät über den CAN-Bus des Fahrzeugs gesendet.

Bei speziellen Typen des CAN-Busses oder speziellen Fahrzeug-Typen oder unter Fehlerbedingungen erhalten jedoch die ABS- oder EBS-Systeme keine Informationen über das Motor-Referenzmoment vom CAN-Bus des Fahrzeugs. Dies kann bspw. an Vorgaben der Fahrzeughersteller liegen.

Ferner ist bei Hybridfahrzeugen - also Fahrzeugen mit einem Hybridantrieb, der neben einem Verbrennungsmotor meist einen Elektromotor beinhaltet - die Information zum Motor-Referenzmoment des Verbrennungsmotors nicht ausreichend als relevantes Motor-Referenzmoment, da der zusätzliche Antrieb unbeachtet bleiben würde.

Der Erfindung liegt daher die Aufgabe zugrunde, das Motor-Referenzmoment unabhängig von ggf. über einen CAN-Bus gesendeten Informationen über das Motor-Referenzmoment zu bestimmen.

Die DE102013008839A1 betrifft ein Verfahren zum Bestimmen der Masse m eines Kraftfahrzeugs, insbesondere eines Nutzfahrzeugs, auf der Grundlage des Leistungssatzes der Mechanik. Um während der Fahrt in einfacher Weise möglichst genau die Fahrzeugmasse zu ermitteln, wird eine Geschwindigkeit v des Kraftfahrzeugs ermittelt und eine Antriebsleistung PA des Kraftfahrzeugs ermittelt. Die Masse m des Kraftfahrzeugs kann dann aus der Geschwindigkeit v und der Antriebsleistung PA ermittelt werden. Die Erfindung betrifft ferner eine Vorrichtung zum Ausüben eines derartigen Verfahrens sowie ein Kraftfahrzeug mit einer derartigen Vorrichtung.

Die WO2015004639A2 offenbart eine elektronische Steuereinheit für Kraftfahrzeuge, die so programmiert ist, dass sie in Echtzeit entweder eine Fahrzeugmasse oder eine Fahrbahnneigung oder beide abschätzt.

Die DE19728867A1 beschreibt ein Verfahren, welches die Messung erster und zweiter Beschleunigungswerte umfasst, die die Fahrzeugbeschleunigungen zum ersten und zweiten Mal darstellen. Gemessen werden mindestens zwei Fahrwerte, die die Antriebskraft bzw. das Antriebsmoment zu diesen Zeitpunkten repräsentieren. In Abhängigkeit mindestens der Beschleunigungs- und Fahrwerte werden mindestens zwei Rollwiderstände bzw. geschätzte Massen ermittelt. Die Masseerkennung hängt zumindest von einem Vergleich zwischen den ermittelten ersten und zweiten Rollwiderständen bzw. Massenschätzungen ab.

Die DE112011104629T5 beschreibt eine Leistungsübertragungssteuervorrichtung für eine Hybridfahrzeug, welches einen Verbrennungsmotor und einen Motor (MG) als Leistungsquellen und ein manuelles Getriebe und eine Reibungskupplung umfasst. Ein Drehmoment des Motors wird allgemein auf den kleineren Motor-Drehmoment-Endreferenzwert eines Motor-Drehmoment-Referenzwerts, bestimmt auf Grundlage einer Gasöffnung, und eines Motor-Drehmoment-Grenzwert, bestimmt auf Grundlage eines Kupplungsrückkehrhubs, eingestellt. Als Ergebnis kann ein Fahrantrieb erhalten werden, der angemessener oder besser der Absicht eines Fahrers entspricht.

Die Erfindung löst diese Aufgabe mit den Merkmalen eines Verfahrens gemäß Anspruch 1 sowie mit einer Einrichtung gemäß Anspruch 14 sowie einem Steuergerät eines Bremssystems eines Kraftfahrzeugs gemäß Anspruch 15.

Das erfindungsgemäße Verfahren zum Bestimmen des in einem Steuergerät eines Kraftfahrzeugs verwendeten Motor-Referenzmoments des Motors (Motor-Maximalmoment) des Kraftfahrzeugs sieht vor, dass das Motor-Referenzmoment durch Schätzung bestimmt wird. Dazu wird ein Wert für die Masse des Kraftfahrzeugs ermittelt. Außerdem werden während einer Beschleunigung des Kraftfahrzeugs zu zwei unterschiedlichen Zeitpunkten jeweils ein Kraftfahrzeug-Geschwindigkeitswert ermittelt. Beschleunigung bedeutet in diesem Sinne nur eine positive Beschleunigung, d.h. kein Abbremsen, d.h., dass das Fahrzeug zum späteren Zeitpunkt schneller fährt als zum früheren Zeitpunkt.

Die Fahrzeug-Geschwindigkeitswerte können bspw. aus Radgeschwindigkeiten des Fahrzeugs ermittelt werden. Dies ist vorteilhaft, da bei modernen Bremssystemen, wie ABS-Bremssystemen und EBS-Bremssystemen, Raddrehzahlsensoren an allen oder wenigstens mehreren Rädern verbaut sind, die Raddrehzahlen liefern, aus denen sich die Fahrzeuggeschwindigkeit mit geringem Aufwand und daher kostengünstig ermitteln lässt.

Aus dem Wert für die Masse des Fahrzeugs sowie den beiden Fahrzeug-Geschwindigkeitswerten wird die aktuelle Motorleistung des Motors berechnet. Vorzugsweise erfolgt die Berechnung auf Basis der Bewegungsgleichung für ein fahrendes Fahrzeug.

Ausgehend von der berechneten Motorleistung wird ein Wert für das Motor-Referenzmoment auf Basis von Leistungs- und Momentenverläufen geschätzt, welche als Funktion der Drehzahl des Motors im Steuergerät oder in einem anderen Modul des Fahrzeugs hinterlegt sind. Die Schätzung des Motor-Referenzmoments kann, muss jedoch nicht, die Drehzahl des Motors berücksichtigen, da aus der Motorleistung unmittelbar auf das Motor-Moment geschlossen werden kann.

Soweit einer gegenwärtigen Motorleistung nicht eindeutig ein gegenwärtiges Motor-Moment zugeordnet werden kann - bspw. weil für eine bestimmte Motorleistung zwei verschiedene Motor-Momente in Frage kämen -, kann der bisherige bzw. der vorangegangene Verlauf der Motorleistung berücksichtigt werden, was eine eindeutige Zuordnung von Motorleistung zu Motor-Moment ermöglicht.

Die erfindungsgemäße Bestimmung des Motor-Referenzmoments (Motor-Maximalmoment) erlaubt eine vom CAN-Bus unabhängige Bestimmung eines Wertes für das Motor-Referenzmoment unter Berücksichtigung der tatsächlichen Leistungseigenschaften des Antriebs eines Kraftfahrzeugs.

Die erfindungsgemäße Bestimmung des Motor-Referenzmoments eignet sich daher auch bei speziellen Fahrzeug-CAN-Typen oder unter Fehlerbedingungen, bei denen herkömmlicherweise keine oder keine richtigen Informationen zum Motor-Referenzmoment über den CAN-Bus des Fahrzeugs erhalten werden können.

Ein besonderer Vorteil der Erfindung liegt darin, dass mit nur einer kleinen Anzahl von Eingangsvariablen auf das Motor-Referenzmoment geschlossen werden kann. Weitere Informationen vom Motor oder Getriebe sind nicht erforderlich.

Insgesamt ermöglicht die Erfindung vorteilhafterweise eine Motor-Schleppmoment-Regelung mit hoher Leistungsfähigkeit bereitzustellen, ohne dass ein Signal über den CAN-Bus mit Informationen über das Motor-Referenzmoment erforderlich ist.

Eine erfindungsgemäße Einrichtung zur Bestimmung des in einem Steuergerät eines Kraftfahrzeugs verwendeten Motor-Referenzmoments umfasst einen Rechner, der aus einem Wert für die Masse des Kraftfahrzeugs und aus Fahrzeug-Geschwindigkeitswerten, die zu zwei unterschiedlichen Zeitpunkten während einer Beschleunigung des Fahrzeugs erhalten werden, eine Motorleistung des Motors des Kraftfahrzeugs berechnet.

Die Einrichtung umfasst ferner einen Schätzer, der anhand der berechneten Motorleistung auf Basis von Leistungs- und Momentenverläufen, welche als Funktion der Drehzahl des Motors im Steuergerät oder in einem anderen Modul hinterlegt sind, einen Wert für das Motor-Referenzmoment schätzt.

Vorzugsweise umfasst die Einrichtung (weitere) Hardware- und/oder Softwaremodule zur Durchführung der Schritte des erfindungsgemäßen Verfahrens und seiner nachfolgend erläuterten Weiterbildungen.

Das erfindungsgemäße Steuergerät eines Bremssystems eines Kraftfahrzeugs umfasst eine Einrichtung zur Bestimmung des Motor-Referenzmoments der vorgenannten Art und/oder Hardware- und/oder Softwaremodule zur Durchführung der Schritte des erfindungsgemäßen Verfahrens und seiner nachfolgend erläuterten Weiterbildungen.

Gemäß einer Weiterbildung der Erfindung werden die beiden Zeitpunkte derart zeitlich nah beieinander liegend gewählt, dass die Beschleunigungswerte des Kraftfahrzeugs zu diesen Zeitpunkten nicht signifikant voneinander abweichen. Dies ermöglicht, das Modell einer gleichmäßig beschleunigten Bewegung zugrunde zu legen. Ferner kann auf diese Weise der Einfluss anderer Fahrwiderstände minimal gehalten werden.

Eine Weiterbildung der Erfindung sieht vor, dass die Masse des Kraftfahrzeugs aus am Kraftfahrzeug gemessenen Luftfederdrücken ermittelt wird. Die Luftfederdrücke sind abhängig von der Beladung des Kraftfahrzeugs und damit insgesamt abhängig von der Masse des Kraftfahrzeugs. Die Luftfederdrücke können daher Aufschluss über die Masse des Kraftfahrzeugs geben. Die Verwendung der Luftfederdrücke zur Ermittlung der Kraftfahrzeugmasse ist vorteilhaft, da somit vermieden wird, dass das Kraftfahrzeug samt Beladung auf einer Waage gewogen werden muss. Das Wiegen auf einer Waage ist nachteilig, da es mit nicht unerheblichem Aufwand verbunden ist, insbesondere da eine durch Wiegen erhaltene Masse zudem dem Fahrzeug und seinen Steuergeräten bekannt gegeben werden müsste. Dieser Aufwand kann dank dieser Weiterbildung der Erfindung vermieden werden.

Gemäß einer Weiterbildung der Erfindung wird die Motorleistung wie folgt berechnet: $P = \frac{m}{2} ⋅ \frac{v {\left(t2\right)}^{2} - v {\left(t1\right)}^{2}}{t 2 - t 1}$ wobei P die Motorleistung, m der ermittelte Wert der Masse des Kraftfahrzeugs, v(t1) der zum Zeitpunkt t1 ermittelte Wert der Kraftfahrzeuggeschwindigkeit und v(t2) der zum Zeitpunkt t2 ermittelte Wert der Kraftfahrzeuggeschwindigkeit sind. Für diese Berechnung der Motorleistung werden die vereinfachten grundlegenden Energiegleichungen $ΔE = \frac{m}{2} ⋅ \left(v{\left(t2\right)}^{2}-v{\left(t1\right)}^{2}\right)$ und $P = \frac{ΔE}{Δt} = \frac{ΔE}{t 2 - t 1}$ verwendet, wobei E die kinetische Energie des Kraftfahrzeugs und damit ΔE/Δt die Änderung der kinetischen Energie des Kraftfahrzeugs nach der Zeit bezeichnet. Dabei fährt das Fahrzeug zum Zeitpunkt t2 schneller als zum Zeitpunkt t1, da die Zeitpunkte innerhalb einer Beschleunigungsphase des Kraftfahrzeugs liegen.

Eine Weiterbildung der Erfindung sieht vor, dass beim Berechnen der Motorleistung einer oder mehrere der folgenden Korrekturfaktoren berücksichtigt werden:
- Korrekturfaktor corr_{a,rot}, der eine Beschleunigung rotatorischer Massen des Kraftfahrzeugs, bspw. der Räder und/oder rotatorischer Massen im Motor und Antriebsstrang, repräsentiert,
- Korrekturfaktor corr_{R}, der einen Rollwiderstand der Räder des Kraftfahrzeugs repräsentiert,
- Korrekturfaktor corr_{L}, der einen Luftwiderstand des Kraftfahrzeugs repräsentiert,
- Korrekturfaktor corr_{St}, der einen Steigungswiderstand einer Steigung der vom Kraftfahrzeug benutzten Fahrbahn repräsentiert,
- Korrekturfaktor corr_{div}, der weitere Reibungswiderstände repräsentiert.

Die Berücksichtigung dieser Korrekturfaktoren führt dazu, dass die berechnete Motorleistung nur die Energie für die translatorische Beschleunigung in der Ebene berücksichtigt. Dadurch werden andere Fahrwiderstände eliminiert, die zu einer fehlerhaften Bestimmung des Motor-Referenzmoments beitragen würden.

Je nach Fahrzeugtyp und damit Einsatzzweck und/oder je nach Fahrsituation wird entweder keiner, nur einer, nur eine Auswahl oder alle der Korrekturfaktoren herangezogen. Bei der Auswahl der Korrekturfaktoren kommen alle möglichen Kombinationen in Betracht, d.h. von den oben fünf genannten Korrekturfaktoren insbesondere 1. mit 2., 1. mit 3., 1. mit 4., 1. mit 5., 2. mit 3., 2. mit 4., 2. mit 5., 3. mit 4., 3. mit 5., 4. mit 5., 1. mit 2. mit 3., 1. mit 2. mit 4., 1. mit 2. mit 5., 1. mit 3. mit 4., 1. mit 3. mit 5., 1. mit 4. mit 5., 2. mit 3. mit 4., 2. mit 3. mit 5., 2. mit 4. mit 5., 3. mit 4. mit 5., 1. mit 2. mit 3. mit 4., 1. mit 2. mit 3. mit 5., 1. mit 2. mit 4. mit 5., 1. mit 3. mit 4. mit 5., 2. mit 3. mit 4. mit 5. Korrekturfaktor, usw..

Gemäß einer Weiterbildung der Erfindung werden bzw. sind einer oder mehrere der Korrekturfaktoren geschwindigkeitsabhängig bestimmt. Typischerweise ist der Luftwiderstand eines Kraftfahrzeugs geschwindigkeitsabhängig; es kann angenommen werden, dass der Luftwiderstand quadratisch mit der Geschwindigkeit zunimmt.

Ferner ist der Korrekturfaktor corr_{a,rot}, der eine Beschleunigung rotatorischer Massen des Kraftfahrzeugs, bspw. der Räder und/oder rotatorischer Massen im Motor und Antriebsstrang, repräsentiert, geschwindigkeitsabhängig; es kann angenommen werden, dass die in rotatorische Massen gespeicherte kinetische Energie mit der Drehzahl bzw. Rotationsgeschwindigkeit der rotierenden Massen zunimmt.

Andere Phänomene können auf die weiteren Korrekturfaktoren wirken.

Bei der Berücksichtigung der Korrekturfaktoren wird zunächst eine vorläufige Motorleistung ohne Berücksichtigung von Korrekturfaktoren berechnet; sodann wird der Wert der vorläufigen Motorleistung multipliziert mit dem bzw. den Korrekturfaktoren, die berücksichtigt werden sollen, woraus sich die berechnete Motorleistung ergibt.

Dank der Berücksichtigung dieser Korrekturfaktoren wird eine höhere Genauigkeit bei der Schätzung des Motor-Referenzmoments erreicht.

Eine Weiterbildung der Erfindung sieht vor, dass das Motor-Referenzmoment wiederholt geschätzt wird, wobei Zustandsmodelle des Kraftfahrzeugs berücksichtigt und/oder rekursive oder iterative Schätzalgorithmen, bspw. unter Verwendung eines Kalman-Filters, verwendet werden. Hierdurch wird ebenfalls eine höhere Genauigkeit bei der Schätzung des Motor-Referenzmoments erreicht.

Gemäß einer Weiterbildung der Erfindung werden die Zeitpunkte, zu denen Kraftfahrzeug-Geschwindigkeitswerte ermittelt werden, auf ihre Geeignetheit hin untersucht und bei Feststellung einer Ungeeignetheit eines Zeitpunkts wird der zugehörige Kraftfahrzeuggeschwindigkeitswert verworfen oder herausgefiltert. Diese Vorgehensweise ist vorteilhaft, da ungeeignete Geschwindigkeitswerte somit die Schätzung des Motor-Referenzmoments nicht verfälschen.

Eine Weiterbildung der Erfindung sieht vor, dass bei der Untersuchung der Geeignetheit der Zeitpunkte Signale aus einem Bremssystem des Kraftfahrzeugs, bspw. von einem Steuergerät eines Antiblockiersystems oder eines elektronischen Bremssystems, berücksichtigt werden, die auf ein ungeeignetes Kraftfahrzeugverhalten hinweisen können. Auf diese Weise können für die Schätzung des Motor-Referenzmoments ungünstige Fahrzustände ausgeschlossen werden.

Gemäß einer Weiterbildung der Erfindung umfassen diese Signale ein Bremsbetätigungssignal zum Signalisieren einer Bremsbetätigung und/oder ein ABS-Aktivierungssignal zum Signalisieren einer Aktivierung eines Antiblockiersystems. Somit können in Bremssystemen vorhandene Informationen herangezogen werden, um die Schätzung des Motor-Referenzmoments zu verbessern.

Eine Weiterbildung der Erfindung sieht vor, dass mittels eines Neigungssensors ein Steigungswiderstand berechnet wird und in Abhängigkeit des berechneten Steigungswiderstands der Korrekturfaktor corr_{St}, der einen Steigungswiderstand einer Steigung der vom Kraftfahrzeug benutzten Fahrbahn repräsentiert, berechnet wird und/oder bei Erkennung einer Neigung anhand eines vom Neigungssensor erzeugten Steigungswinkels außerhalb eines vorbestimmten Bereichs ein zeitgleich ermittelter Kraftfahrzeuggeschwindigkeitswert ausgeschlossen oder als ungeeignet deklariert wird. Auf diese Weise können Messungen auf unebener Strecke verworfen werden und verfälschen die Schätzung des Motor-Referenzmoments nicht.

Gemäß einer Weiterbildung der Erfindung wird die Motorleistung fortlaufend wiederholt berechnet und ein Maximalwert der Motorleistung Pmax ermittelt, indem ein bereits vorhandener Wert für Pmax durch einen größeren berechneten Wert der Motorleistung ersetzt wird, sofern der größere berechnete Wert zuvor als zuverlässig bewertet worden ist. Auf diese Weise erhält das Kraftfahrzeug bzw. eines seiner Steuergeräte nach einem gewissen Beobachtungszeitraum die maximale Motorleistung allein aus Messungen und Berechnungen während des Fahrbetriebs. Die maximale Motorleistung muss daher nicht in entsprechende Steuergeräte einprogrammiert werden. Dies ist insbesondere vorteilhaft, wenn die Motorleistung bei Herstellung derartiger Steuergeräte unbekannt ist, da noch unklar ist, in welches Fahrzeug ein derartiges Steuergerät verbaut werden wird.

Eine Weiterbildung der Erfindung sieht vor, dass eine gemessene Motordrehzahlinformation oder eine von Informationen über einen eingelegten Gang und einer Raddrehzahl abgeleitete Motordrehzahlinformation herangezogen wird und aus der Motordrehzahlinformation und der Motorleistung das Motor-Referenzmoment bestimmt wird.

Gemäß einer Weiterbildung wird das Motor-Referenzmoment fortlaufend wiederholt geschätzt und ein Maximalwert des Motor-Referenzmoments bestimmt, indem ein bereits vorhandener Wert für den Maximalwert durch einen größeren geschätzten Wert des Motor-Referenzmoments ersetzt wird, sofern der größere geschätzte Wert als zuverlässig bewertet worden ist.

Ein besonderer Vorteil der Erfindung liegt darin, dass keine Informationen über den Kupplungszustand des Fahrzeugs verfügbar sein müssen, da maximale Beschleunigungswerte grundsätzlich nur bei geschlossener Kupplung erreicht werden.

Die Erfindung kann sowohl in konventionellen Fahrzeugen, insbesondere Fahrzeugen mit Verbrennungsmotor, als auch in Parallelhybrid-Fahrzeugen angewendet werden, wo die Eingangsdrehzahlen des Getriebes typischerweise im Arbeitsbereich eines Dieselmotors liegen.

Weiterbildungen der Erfindung ergeben sich aus den Ansprüchen, der Beschreibung und den Zeichnungen. Die vorgenannten Vorteile von Merkmalen und von Kombinationen mehrerer Merkmale sind beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen zu entnehmen. Es versteht sich, dass zahlreiche Änderungen sowie Abwandlungen möglich sind, ohne dass dadurch der durch die Patentansprüche definierte Schutzbereich verlassen wird.

In der Zeichnung zeigen:
- Fig. 1: ein Ausführungsbeispiel einer erfindungsgemäßen Einrichtung zur Bestimmung des Motor-Referenzmoments des Motors eines Kraftfahrzeugs,
- Fig. 2: ein Ausführungsbeispiel eines erfindungsgemäßen Verfahrens zum Bestimmen des Motor-Referenzmoments mit einer Einrichtung gemäß Fig. 1,
- Fig. 3: ein Ausführungsbeispiel einer Anordnung der in Fig. 1 gezeigten Einrichtung außerhalb eines Steuergeräts, das das Motor-Referenzmoment verwendet, und
- Fig. 4: ein Ausführungsbeispiel einer alternativen Anordnung der in Fig. 1 gezeigten Einrichtung innerhalb eines Steuergeräts, das das Motor-Referenzmoment verwendet.

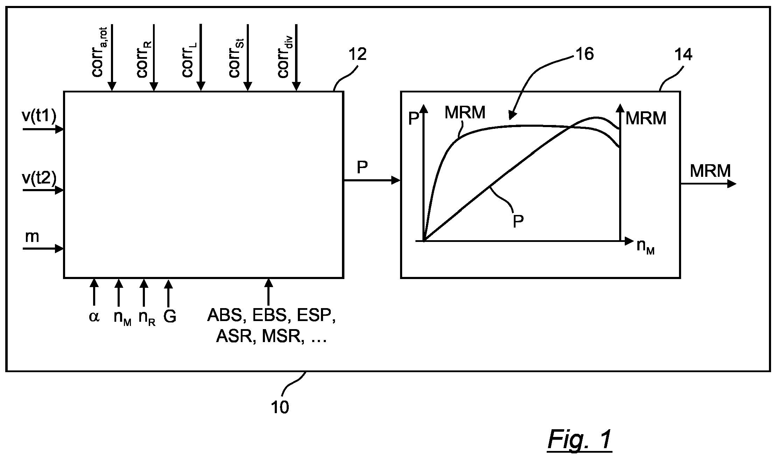

Fig. 1 zeigt ein Ausführungsbeispiel einer erfindungsgemäßen Einrichtung 10 zur Bestimmung des Motor-Referenzmoments des Motors eines Kraftfahrzeugs.

Unter dem Motor eines Kraftfahrzeugs wird das Motorsystem verstanden, das im einfachen Fall lediglich einen Verbrennungsmotor umfasst, jedoch bei höher entwickelten Motorsystemen, bspw. Hybridfahrzeugen, die Summe der Antriebsaggregate, bspw. einen Verbrennungsmotor sowie einen oder mehrere Elektromotoren, welche zum Antrieb des Fahrzeugs dienen. Je nach Betriebsart wird ein Hybridfahrzeug entweder nur von dem oder den Elektromotoren oder dem Verbrennungsmotor oder gleichzeitig vom Verbrennungsmotor und dem oder den Elektromotoren angetrieben. Das Motor-Referenzmoment bezeichnet das Maximalmoment aller Antriebsaggregate zusammen.

Die Einrichtung 10 ist Teil des Kraftfahrzeugs, insbesondere Teil einer seiner Systemkomponenten.

Die Einrichtung 10 umfasst einen Rechner 12 und einen Schätzer 14.

Der Rechner 12 erhält verschiedene Größen und Parameter, insbesondere einen Wert für die Masse m des Kraftfahrzeugs und zwei zu unterschiedlichen Zeitpunkten t1 und t2 erhaltene Kraftfahrzeug-Geschwindigkeitswerte v(t1), v(t2). Die Kraftfahrzeug-Geschwindigkeitswerte v(t1), v(t2) können bspw. von Raddrehzahlen ermittelt werden, welche von Raddrehzahlsensoren erhalten werden. Derartige Raddrehzahlsensoren sind regelmäßig bei Fahrzeugen verbaut, die ein Antiblockiersystem oder ein elektronisches Bremssystem aufweisen. Die Fahrzeug-Geschwindigkeitswerte v(t1), v(t2) können bspw. auch direkt von einem Steuergerät eines Antiblockiersystems oder eines elektronischen Bremssystems an die Einrichtung 10 übermittelt werden.

Die Masse m des Kraftfahrzeugs kann bspw. aus am Kraftfahrzeug gemessenen Luftfederdrücken ermittelt werden. Zu diesem Zweck wird ein Druck im Luftfedersystem gemessen und aus dem gemessenen Druck die Masse m des Kraftfahrzeugs errechnet.

Eine Ermittlung der Masse m des Kraftfahrzeugs ist insbesondere bei Nutzfahrzeugen sinnvoll, da die Beladung eines Nutzfahrzeugs signifikant veränderlich ist und daher ein beladenes Nutzfahrzeug ein Mehrfaches der Masse erreichen kann wie dasselbe Nutzfahrzeug ohne Ladung.

Der Rechner 12 berechnet zunächst eine Motorleistung P aus den Werten der Masse m sowie der Kraftfahrzeug-Geschwindigkeitswerte v(t1), v(t2) anhand der Gleichung $P = \frac{m}{2} ⋅ \frac{v {\left(t2\right)}^{2} - v {\left(t1\right)}^{2}}{t 2 - t 1} .$ Vorzugsweise wird die somit berechnete Motorleistung nur als vorläufiger Wert P' betrachtet, der um einen oder mehrere der Korrekturfaktoren korrigiert wird, indem der vorläufige Wert P' mit einem oder mehreren der Korrekturfaktoren multipliziert wird.

Die Korrekturfaktoren umfassen folgende Größen:
- einen Korrekturfaktor corr_{a,rot}, der eine Beschleunigung rotatorischer Massen des Kraftfahrzeugs repräsentiert,
- einen Korrekturfaktor corr_{R}, der einen Rollwiderstand der Räder des Kraftfahrzeugs repräsentiert,
- einen Korrekturfaktor corr_{L}, der einen Luftwiderstand des Kraftfahrzeugs repräsentiert,
- einen Korrekturfaktor corr_{St}, der einen Steigungswiderstand einer Steigung der vom Kraftfahrzeug benutzten Fahrbahn repräsentiert,
- einen Korrekturfaktor corr_{div}, der weitere Reibungswiderstände repräsentiert.

Der vom Rechner 12 ausgegebene Wert für die Motorleistung P ergibt sich daher aus Multiplikation des vorläufigen Werts P' mit dem Korrekturfaktor corr_{a,rot}, dem Korrekturfaktor corr_{R}, dem Korrekturfaktor corr_{L}, dem Korrekturfaktor corr_{St} und/oder dem Korrekturfaktor corr_{div}.

Der Rechner 12 kann weitere Größen und Parameter erhalten wie die Neigung bzw. Steigung α des Fahrzeugs, die mittels eines Neigungssensors gemessen werden kann.

Ferner kann der Rechner 12 die durch Messung ermittelte Drehzahl des Motors n_{M} oder - soweit vorhanden - die Drehzahlen weiterer Motoren, insbesondere bei Hybridfahrzeugen, erhalten.

Ferner kann der Rechner 12 die durch Messung ermittelte Drehzahl eines Rades n_{M} oder Drehzahlen mehrerer Räder erhalten. Ferner kann der Rechner 12 eine Information über den eingelegten Gang G erhalten. Aus den Informationen über den eingelegten Gang G sowie der ermittelten Raddrehzahl n_{M} kann der Rechner 12 die Motordrehzahl ableiten.

Der Rechner 12 erhält ferner Informationen über etwaige Eingriffe zur Betätigung der Radbremsen oder der Motordrehzahl von einem Antiblockiersystem ABS, einem elektronischen Bremssystem EBS, einem Fahrdynamikregelsystem ESP, einem Antriebsschlupfregelsystem ASR und/oder einem Motor-Schleppmoment-Regelsystem MSR. Aus diesen Informationen wird abgeleitet, ob die herangezogenen Kraftfahrzeug-Geschwindigkeitswerte v(t1), v(t2) im Rahmen der Schätzung des Motor-Referenzmoments geeignet oder ungeeignet sind. Regelmäßig sind nämlich diese Kraftfahrzeug-Geschwindigkeitswerte v(t1), v(t2) ungeeignet, wenn sie während eines Eingriffs eines dieser Systeme ermittelt worden sind. Sofern die Ungeeignetheit der herangezogenen Kraftfahrzeug-Geschwindigkeitswerte v(t1), v(t2) festgestellt wird, wird entweder die Leistungsberechnung erst gar nicht durchgeführt oder ein erhaltener Leistungswert P verworfen.

Der Rechner 12 übergibt geeignete Leistungswerte P an den Schätzer 14. Der Schätzer 14 schätzt anhand der berechneten Motorleistung P auf Basis von Leistungs- und Momentenverläufen 16, welche als Funktion der Drehzahl des Motors n_{M} hinterlegt sind, einen Wert für das Motor-Referenzmoment MRM. Dieser Wert wird von der Einrichtung 10, ggf. unter Berücksichtigung von Zustandsmodellen des Kraftfahrzeugs und/oder rekursiven und interaktiven Schätzalgorithmen, bspw. unter Verwendung eines Kalman-Filters, weiterverarbeitet.

Schließlich stellt die Einrichtung 10 einen Wert für das Motor-Referenzmoment MRM einem oder mehreren Steuergeräten des Kraftfahrzeugs, wie bspw. einem Steuergerät einer Motor-Schleppmoment-Regelung, einem ABS-Steuergerät oder einem EBS-Steuergerät, zur Verfügung.

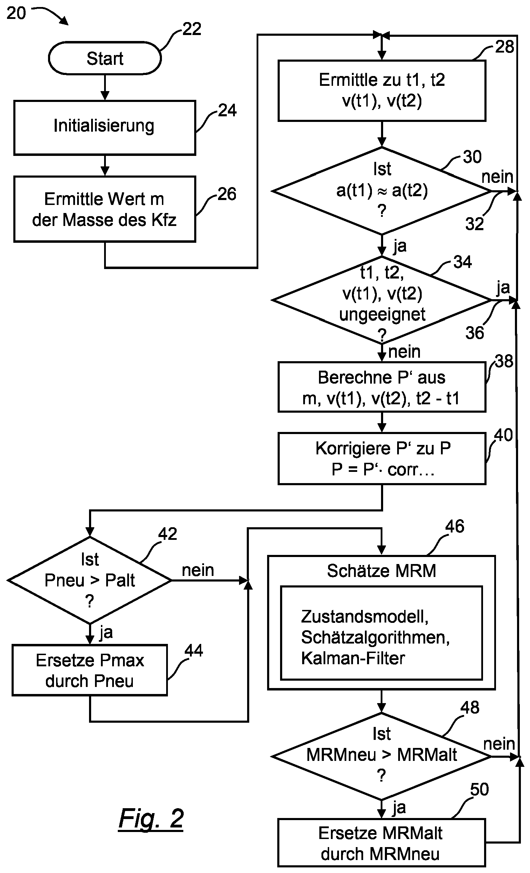

Fig. 2 zeigt einen beispielhaften Verfahrensablauf 20 zum Bestimmen des Motor-Referenzmoments MRM.

Nach einem Start 22 des Verfahrens 20 werden zunächst in einem Initialisierungsschritt 24 Verfahrensparameter initialisiert.

In einem Ermittlungsschritt 26 wird ein Wert m der Masse des Kraftfahrzeugs ermittelt, wie oben beschrieben, bspw. anhand von Drücken im Luftfederungssystem.

In einem weiteren Ermittlungsschritt 28 wird zu zwei unterschiedlichen Zeitpunkten t1 und t2 während einer Beschleunigung des Kraftfahrzeugs jeweils ein Kraftfahrzeug-Geschwindigkeitswert v(t1), v(t2) ermittelt.

In einem Prüfschritt 30 wird überprüft, ob die Beschleunigung des Kraftfahrzeugs zu beiden Zeitpunkten annähernd gleich gewesen ist, um sicherzustellen, dass eine annähernd gleichförmig beschleunigte Bewegung des Kraftfahrzeugs vorliegt. Sofern dies nicht der Fall sein sollte, verzweigt der Verfahrensablauf über die Verzweigung 32 zurück zum Ermittlungsschritt 28.

Sofern eine annähernd gleichförmig beschleunigte Bewegung des Kraftfahrzeugs vorliegt, wird in einem weiteren Prüfschritt 34 geprüft, ob die Zeitpunkte t1 und t2 sowie die Kraftfahrzeug-Geschwindigkeitswerte v(t1), v(t2) geeignet sind. Hierzu wird überprüft, ob die Zeitpunkte ausreichend nah beieinander gelegen haben, damit mit ausreichend hoher Genauigkeit von einer gleichmäßig beschleunigten Bewegung ausgegangen werden kann. Außerdem wird - wie oben erläutert - überprüft, ob ggf. Eingriffe von Fahrerassistenzsystemen, wie von einem Antiblockiersystem ABS, einem elektronischen Bremssystem EBS, einem Fahrdynamikregelsystem ESP, einem Antriebsschlupfregelsystem ASR und/oder einem Motor-Schleppmoment-Regelsystem MSR, zu den Zeitpunkten t1 und t2 vorgelegen haben, um ggf. die Kraftfahrzeug-Geschwindigkeitswerte v(t1), v(t2) als ungeeignet zu deklarieren.

Ferner wird bei Erkennung einer Neigung anhand eines von einem Neigungssensor erzeugten Steigungswinkels außerhalb eines vorbestimmten Bereichs ein zeitgleich ermittelter Kraftfahrzeuggeschwindigkeitswert ausgeschlossen oder als ungeeignet deklariert.

Sofern eine Ungeeignetheit der herangezogenen Werte, insbesondere Kraftfahrzeug-geschwindigkeitswerte, festgestellt worden ist, verzweigt der Verfahrensablauf über die Verzweigung 36 zurück zum Ermittlungsschritt 28.

In einem Berechnungsschritt 38 wird ein vorläufiger Wert für die Motorleistung P' aus der Masse m des Kraftfahrzeugs sowie den Kraftfahrzeug-Geschwindigkeitswerten v(t1), v(t2) und der zeitlichen Differenz t2 - t1 der beiden Zeitpunkte t1 und t2 berechnet.

In einem nachfolgenden Korrigierschritt 40 wird der vorläufige Wert für die Motorleistung P' durch Multiplikation mit einem oder mehreren der o.g. Korrekturfaktoren korrigiert.

In einem Prüfschritt 42 wird geprüft, ob die berechnete und ggf. korrigierte aktuelle Motorleistung Pneu größer ist als eine zuvor berechnete und ggf. korrigierte Motorleistung Palt. Sofern dies der Fall ist, erfolgt eine Verzweigung zum Ersetzungsschritt 44, in welchem ein zuvor gespeicherter Maximalwert Pmax durch den aktuellen Wert für die Motorleistung Pneu ersetzt wird und es wird mit einem Schätzschritt 46 fortgefahren.

Sofern im Prüfschritt 42 jedoch festgestellt wird, dass die berechnete und ggf. korrigierte aktuelle Motorleistung Pneu nicht größer ist als eine zuvor berechnete und ggf. korrigierte Motorleistung Palt, wird der Ersetzungsschritt 44 übersprungen und mit dem Schätzschritt 46 fortgefahren.

Im Schätzschritt 46 wird das Motor-Referenzmoment MRM geschätzt. Da die erläuterten Schritte 28, 30, 34, 38, 40, 42 und 44 fortlaufend wiederholt durchgeführt werden, wird auch das Motor-Referenzmoment wiederholt geschätzt. Dabei können Zustandsmodelle des Kraftfahrzeugs verwendet werden und/oder rekursive oder iterative Schätzalgorithmen einfließen, z.B. durch Kalman-Filter. Ungeeignete Werte können dabei erkannt und herausgefiltert werden.

In einem Prüfschritt 48 wird geprüft, ob das aktuell geschätzte Motor-Referenzmoment MRMneu größer ist als das zuvor geschätzte Motor-Referenzmoment MRMalt. Sofern dies der Fall ist, erfolgt eine Verzweigung zum Ersetzungsschritt 50, in welchem ein zuvor gespeichertes Motor-Referenzmoment MRMalt durch das aktuell geschätzte Motor-Referenzmoment MRMneu ersetzt wird und es wird mit dem Ermittlungsschritt 28 fortgefahren.

Sofern im Prüfschritt 48 jedoch festgestellt wird, dass das aktuell geschätzte Motor-Referenzmoment MRMneu nicht größer ist als das zuvor geschätzte Motor-Referenzmoment MRMalt, wird der Ersetzungsschritt 50 übersprungen und mit dem Ermittlungsschritt 28 fortgefahren.

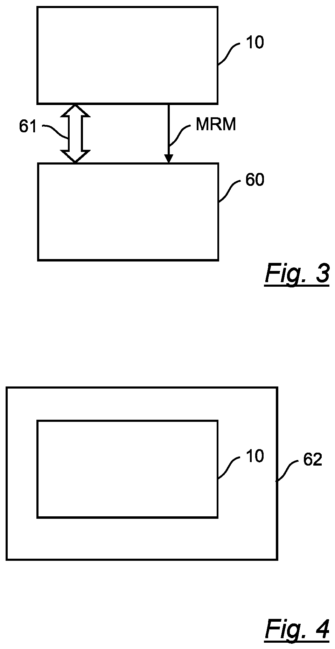

Fig. 3 zeigt eine Anordnung der in Fig. 1 gezeigten Einrichtung 10 außerhalb eines Steuergeräts 60, das das Motor-Referenzmoment MRM von der Einrichtung 10 erhält und verwendet. Über eine Datenverbindung 61 können Daten, insbesondere die im Zusammenhang mit Fig. 1 erläuterten Parameter, zwischen dem Steuergerät 60 und der Einrichtung 10 ausgetauscht werden.

Fig. 4 zeigt eine alternative Anordnung der in Fig. 1 gezeigten Einrichtung 10 innerhalb eines solchen Steuergeräts 62, das das Motor-Referenzmoment MRM verwendet.

### Bezugszeichenliste (Teil der Beschreibung):

- 10: Einrichtung
- 12: Rechner
- 14: Schätzer
- 16: Leistungs- und Momentenverläufe
- 20: Verfahrensablauf
- 22: Start
- 24: Initialisierungsschritt
- 26: Ermittlungsschritt
- 28: Ermittlungsschritt
- 30: Prüfschritt
- 32: Verzweigung
- 34: Prüfschritt
- 36: Verzweigung
- 38: Berechnungsschritt
- 40: Korrigierschritt
- 42: Prüfschritt
- 44: Ersetzungsschritt
- 46: Schätzschritt
- 48: Prüfschritt
- 50: Ersetzungsschritt
- 60: Steuergerät
- 61: Datenverbindung
- 62: Steuergerät
- m: Masse des Kraftfahrzeugs
- t1: Zeitpunkt
- t2: Zeitpunkt
- v(t1): Kraftfahrzeug-Geschwindigkeitswert zum Zeitpunkt t1
- v(t2): Kraftfahrzeug-Geschwindigkeitswert zum Zeitpunkt t2
- a(t1): Kraftfahrzeug-Beschleunigungswert zum Zeitpunkt t1
- a(t2): Kraftfahrzeug-Beschleunigungswert zum Zeitpunkt t2
- corr_{a,rot}: Beschleunigung rotatorischer Massen des Kraftfahrzeugs repräsentierender Korrekturfaktor
- corr_{R}: Rollwiderstand der Räder des Kraftfahrzeugs repräsentierender Korrekturfaktor
- corr_{L}: Luftwiderstand des Kraftfahrzeugs repräsentierender Korrekturfaktor
- corr_{St}: Steigungswiderstand repräsentierender Korrekturfaktor
- corr_{div}: weitere Reibungswiderstände repräsentierender Korrekturfaktor
- α: Neigung/Steigung
- n_{M}: Motordrehzahl
- n_{R}: Raddrehzahl
- G: Gang
- MRM: Motor-Referenzmoment
- MRMneu: aktuelles Motor-Referenzmoment
- MRMalt: vorheriges Motor-Referenzmoment
- P: Motorleistung
- P': vorläufige Motorleistung
- Pneu: aktuelle Motorleistung
- Palt: vorherige Motorleistung
- Pmax: maximale Motorleistung
- ABS: Antiblockiersystem
- EBS: elektronisches Bremssystem
- ESP: Fahrdynamikregelsystem
- ASR: Antriebsschlupfregelsystem
- MSR: Motor-Schleppmoment-Regelsystem

## Patentansprüche

1. Verfahren zum Bestimmen des in einem Steuergerät (60, 62) eines Kraftfahrzeugs verwendeten Motor-Referenzmoments (MRM) des Motors des Kraftfahrzeugs,
**dadurch gekennzeichnet, dass**
das Motor-Referenzmoment (MRM) durch Schätzung (46) bestimmt wird,
wobei ein Wert für die Masse (m) des Kraftfahrzeugs und während einer Beschleunigung des Kraftfahrzeugs zu zwei unterschiedlichen Zeitpunkten (t1, t2) jeweils ein Kraftfahrzeug-Geschwindigkeitswert (v(t1), v(t2)) ermittelt werden,
aus diesen Werten (m, v(t1), v(t2)) eine Motorleistung (P'; P) des Motors berechnet wird und
anhand der berechneten Motorleistung (P'; P) auf Basis von Leistungs- und Momentenverläufen (16), welche als Funktion der Drehzahl (n_{M}) des Motors hinterlegt sind, ein Wert für das Motor-Referenzmoment (MRM) geschätzt wird.

2. Verfahren nach Anspruch 1, **dadurch gekennzeichnet, dass** die beiden Zeitpunkte (t1, t2) zeitlich derart nah beieinander liegend gewählt werden, dass die Beschleunigungswerte (a(t1), a(t2)) des Kraftfahrzeugs zu diesen Zeitpunkten (t1, t2) nicht signifikant voneinander abweichen.

3. Verfahren nach Anspruch 1 oder 2, **dadurch gekennzeichnet, dass** der Wert für die Masse (m) des Kraftfahrzeugs aus am Kraftfahrzeug gemessenen Luftfederdrücken ermittelt wird.

4. Verfahren nach einem der vorhergehenden Ansprüche, **dadurch gekennzeichnet, dass** die Motorleistung (P) wie folgt berechnet wird: $P = \frac{m}{2} ⋅ \frac{v {\left(t2\right)}^{2} - v {\left(t1\right)}^{2}}{t 2 - t 1}$ wobei P die Motorleistung, m der ermittelte Wert der Masse des Kraftfahrzeugs, v(t1) der zum Zeitpunkt t1 ermittelte Wert der Kraftfahrzeuggeschwindigkeit und v(t2) der zum Zeitpunkt t2 ermittelte Wert der Kraftfahrzeuggeschwindigkeit sind.

5. Verfahren nach einem der vorhergehenden Ansprüche, **dadurch gekennzeichnet, dass** beim Berechnen der Motorleistung (P) einer oder mehrere der folgenden Korrekturfaktoren berücksichtigt werden:
- Korrekturfaktor corr_{a,rot}, der eine Beschleunigung rotatorischer Massen des Kraftfahrzeugs repräsentiert,
- Korrekturfaktor corr_{R}, der einen Rollwiderstand der Räder des Kraftfahrzeugs repräsentiert,
- Korrekturfaktor corr_{L}, der einen Luftwiderstand des Kraftfahrzeugs repräsentiert,
- Korrekturfaktor corr_{St}, der einen Steigungswiderstand einer Steigung der vom Kraftfahrzeug benutzten Fahrbahn repräsentiert,
- Korrekturfaktor corr_{div}, der weitere Reibungswiderstände repräsentiert.

6. Verfahren nach einem der vorhergehenden Ansprüche, **dadurch gekennzeichnet, dass** das Motor-Referenzmoment (MRM) wiederholt geschätzt (46) wird, wobei Zustandsmodelle des Kraftfahrzeugs berücksichtigt und/oder rekursive oder iterative Schätzalgorithmen, bspw. unter Verwendung eines Kalman-Filters, verwendet werden.

7. Verfahren nach einem der vorhergehenden Ansprüche, **dadurch gekennzeichnet, dass** die Zeitpunkte (t1, t2) auf ihre Geeignetheit hin untersucht (34) werden und bei Feststellung einer Ungeeignetheit eines Zeitpunkts (t1, t2) der zugehörige Kraftfahrzeuggeschwindigkeitswert (v(t1), v(t2)) verworfen oder herausgefiltert wird.

8. Verfahren nach Anspruch 7, **dadurch gekennzeichnet, dass** bei Untersuchung (34) der Geeignetheit der Zeitpunkte (t1, t2) Signale von einem Bremssystem des Kraftfahrzeugs, bspw. von einem Steuergerät eines Antiblockiersystems (ABS) oder eines elektronischen Bremssystems (EBS), berücksichtigt werden, die auf ein ungeeignetes Kraftfahrzeugverhalten hinweisen.

9. Verfahren nach Anspruch 8, **dadurch gekennzeichnet, dass** die Signale ein Bremsbetätigungssignal zum Signalisieren einer Bremsbetätigung und/oder ein Aktivierungssignal zum Signalisieren einer Aktivierung eines Antiblockiersystems (ABS) umfassen.

10. Verfahren nach einem der vorhergehenden Ansprüche, **dadurch gekennzeichnet, dass** mittels eines Neigungssensors ein Steigungswiderstand berechnet wird und in Abhängigkeit des Steigungswiderstands der Korrekturfaktor corr_{St} berechnet wird, der den Steigungswiderstand repräsentiert, und/oder bei Erkennung einer Neigung anhand eines vom Neigungssensor erzeugten Steigungswinkels außerhalb eines vorbestimmten Bereichs ein zeitgleich ermittelter Kraftfahrzeuggeschwindigkeitswert ausgeschlossen oder als ungeeignet deklariert wird (34).

11. Verfahren nach einem der vorhergehenden Ansprüche, **dadurch gekennzeichnet, dass** die Motorleistung (P) fortlaufend wiederholt berechnet wird und ein Maximalwert (Pmax) der Motorleistung ermittelt wird, indem ein bereits vorhandener Maximalwert (Pmax) der Motorleistung durch einen größeren berechneten Wert der Motorleistung (Pneu) ersetzt wird, sofern der größere berechnete Wert (Pneu) zuvor als zuverlässig bewertet worden ist.

12. Verfahren nach einem der vorhergehenden Ansprüche, **dadurch gekennzeichnet, dass** eine gemessene Motordrehzahlinformation (n_{M}) oder eine von Informationen über einen eingelegten Gang (G) und einer Raddrehzahl (n_{R}) abgeleitete Motordrehzahlinformation (n_{M}) herangezogen wird und aus der Motordrehzahlinformation (n_{M}) und der Motorleistung (P) das Motor-Referenzmoment bestimmt wird.

13. Verfahren nach einem der vorhergehenden Ansprüche, **dadurch gekennzeichnet, dass** das Motor-Referenzmoment (MRM) fortlaufend wiederholt geschätzt wird und ein Maximalwert (MRM) des Motor-Referenzmoments bestimmt wird, indem ein bereits vorhandener Wert (MRMalt) für den Maximalwert durch einen größeren geschätzten Wert des Motor-Referenzmoments (MRMneu) ersetzt wird, sofern der größere geschätzte Wert (MRMneu) als zuverlässig bewertet worden ist.

14. Einrichtung zur Bestimmung des in einem Steuergerät (60; 62) eines Kraftfahrzeugs verwendeten Motor-Referenzmoments (MRM) des Motors des Kraftfahrzeugs,
**gekennzeichnet durch**
einen Rechner (12), der aus einem Wert für die Masse (m) des Kraftfahrzeugs und aus während einer Beschleunigung des Kraftfahrzeugs zu zwei unterschiedlichen Zeitpunkten (t1, t2) erhaltenen Kraftfahrzeug-Geschwindigkeitswerten (v(t1), v(t2)) eine Motorleistung (P', P) des Motors berechnet, und
einem Schätzer (14), der anhand der berechneten Motorleistung (P', P) auf Basis von Leistungs- und Momentenverläufen (16), welche als Funktion der Drehzahl (n_{M}) des Motors hinterlegt sind, einen Wert für das Motor-Referenzmoment (MRM) schätzt.

15. Steuergerät eines Bremssystems eines Kraftfahrzeugs,
**gekennzeichnet durch**
eine Einrichtung (10) zur Bestimmung des Motor-Referenzmoments (MRM) des Motors des Kraftfahrzeugs nach Anspruch 14 und/oder Hardware- und/oder Softwaremodule zur Durchführung der Schritte eines Verfahrens nach einem der Ansprüche 1 bis 13.

## Claims

1. Method for determining the engine reference torque (MRM) of an engine of a motor vehicle, which engine reference torque is used in a control unit (60, 62) of the motor vehicle,
**characterized in that**
the engine reference torque (MRM) is determined by estimation (46), a value for the mass (m) of the motor vehicle being ascertained and a motor vehicle speed value (v(t1), v(t2)) being ascertained at each of two different times (t1, t2) during an acceleration of the motor vehicle,
an engine power (P'; P) of the engine is calculated from these values (m, v(t1), v(t2)) and,
on the basis of the calculated engine power (P'; P), a value for the engine reference torque (MRM) is estimated on the basis of power and torque curves (16) which are stored as a function of the speed (n_{M}) of the engine.

2. Method according to claim 1, **characterized in that** the two times (t1, t2) are selected to be temporally close to one another such that the acceleration values (a(t1), a(t2)) of the motor vehicle at these times (t1, t2) do not differ significantly from one another.

3. Method according to claim 1 or 2, **characterized in that** the value for the mass (m) of the motor vehicle is ascertained from air spring pressures measured on the motor vehicle.

4. Method according to any of the preceding claims, **characterized in that** the engine power (P) is calculated as follows: $P = \frac{m}{2} ⋅ \frac{v {\left(t2\right)}^{2} - v {\left(t1\right)}^{2}}{t 2 - t 1}$ P being the engine power, m being the ascertained value of the mass of the motor vehicle, v(t1) being the value of the motor vehicle speed ascertained at the time t1, and v(t2) being the value of the motor vehicle speed ascertained at the time t2.

5. Method according to any of the preceding claims, **characterized in that,** when calculating the engine power (P), one or more of the following correction factors are taken into account:
- correction factor (corr)_{a,rot} which represents an acceleration of rotating masses of the motor vehicle,
- correction factor corr_{R} which represents a rolling resistance of the wheels of the motor vehicle,
- correction factor corr_{L} which represents an air resistance of the motor vehicle,
- correction factor corr_{St} which represents a gradient resistance of a gradient of the roadway used by the motor vehicle,
- correction factor corr_{div} which represents further frictional resistances.

6. Method according to any of the preceding claims, **characterized in that** the engine reference torque (MRM) is repeatedly estimated (46), taking into account state models of the motor vehicle and/or using recursive or iterative estimation algorithms, e.g. using a Kalman filter.

7. Method according to any of the preceding claims, **characterized in that** the times (t1, t2) are examined (34) with regard to the suitability thereof and if a time (t1, t2) is found to be unsuitable, the associated motor vehicle speed value (v(t1), v(t2)) is discarded or filtered out.

8. Method according to claim 7, **characterized in that,** when examining (34) the suitability of the times (t1, t2), signals from a brake system of the motor vehicle, e.g. from a control unit of an anti-lock braking system (ABS) or of an electronic braking system (EBS), are taken into account, which signals indicate an unsuitable motor vehicle behavior.

9. Method according to claim 8, **characterized in that** the signals comprise a brake application signal for signalizing a brake application and/or an activation signal for signalizing an activation of an anti-lock braking system (ABS).

10. Method according to any of the preceding claims, **characterized in that** a gradient resistance is calculated by means of an inclination sensor, and the correction factor corr_{St} is calculated on the basis of the gradient resistance, which correction factor represents the gradient resistance, and/or, when an inclination is detected on the basis of a gradient angle generated by the inclination sensor, which gradient angle is outside a predetermined range, a simultaneously ascertained motor vehicle speed value is excluded or declared unsuitable (34).

11. Method according to any of the preceding claims, **characterized in that** the engine power (P) is continuously repeatedly calculated and a maximum value (Pmax) of the engine power is ascertained by replacing an existing maximum value (Pmax) of the engine power by a larger calculated value of the engine power (Pneu), provided that the larger calculated value (Pneu) has previously been assessed as reliable.

12. Method according to any of the preceding claims, **characterized in that** measured engine speed information (n_{M}) or engine speed information (n_{M}) derived from information about an engaged gear (G) and a wheel speed (n_{R}) is used and the engine reference torque is determined from the engine speed information (n_{M}) and the engine power (P).

13. Method according to any of the preceding claims, **characterized in that** the engine reference torque (MRM) is continuously repeatedly estimated, and a maximum value (MRM) of the engine reference torque is determined by replacing an existing value (MRMalt) for the maximum value by a larger estimated value of the engine reference torque (MRMneu), provided that the larger estimated value (MRMneu) has been assessed as reliable.

14. Device for determining the engine reference torque (MRM) of an engine of a motor vehicle, which engine reference torque is used in a control unit (60; 62) of the motor vehicle,
**characterized by**
a computer (12) which calculates an engine power (P', P) of the engine from a value for the mass (m) of the motor vehicle and from motor vehicle speed values (v(t1), v(t2)) obtained during an acceleration of the motor vehicle at two different times (t1, t2), and
an estimator (14) which estimates, on the basis of the calculated engine power (P', P), a value for the engine reference torque (MRM) on the basis of power and torque curves (16) which are stored as a function of the speed (n_{M}) of the engine.

15. Control unit of a brake system of a motor vehicle,
**characterized by**
a device (10) for determining the engine reference torque (MRM) of the engine of the motor vehicle according to claim 14 and/or hardware and/or software modules for carrying out the steps of a method according to any of claims 1 to 13.

## Revendications

1. Procédé permettant la détermination du couple de référence moteur (MRM) du moteur d'un véhicule automobile utilisé dans un appareil de commande (60, 62) du véhicule automobile,
**caractérisé en ce que**
le couple de référence moteur (MRM) est déterminé par estimation (46), dans lequel une valeur pour la masse (m) du véhicule automobile et, pendant une accélération du véhicule automobile à deux instants différents (t1, t2), respectivement une valeur de vitesse de véhicule automobile (v(t1), v(t2)) sont déterminées,
à partir de ces valeurs (m, v(t1), v(t2)), une puissance moteur (P' ; P) du moteur est calculée, et
une valeur pour le couple de référence moteur (MRM) est estimée à l'aide de la puissance moteur (P' ; P) calculée sur la base de courbes de puissance et de couple (16) qui sont enregistrées en fonction du régime (n_{M}) du moteur.

2. Procédé selon la revendication 1, **caractérisé en ce que** les deux instants (t1, t2) sont choisis proches dans le temps de telle sorte que les valeurs d'accélération (a(t1), a(t2)) du véhicule automobile à ces instants (t1, t2) ne diffèrent pas de manière significative.

3. Procédé selon la revendication 1 ou 2, **caractérisé en ce que** la valeur pour la masse (m) du véhicule automobile est déterminée à partir de pressions de suspension pneumatique mesurées sur le véhicule automobile.

4. Procédé selon l'une des revendications précédentes,
**caractérisé en ce que** la puissance moteur (P) est calculée comme suit : $P = \frac{m}{2} ⋅ \frac{v {\left(t2\right)}^{2} - v {\left(t1\right)}^{2}}{t 2 - t 1}$ dans lequel P est la puissance moteur, m est la valeur déterminée de la masse du véhicule automobile, v(t1) est la valeur de la vitesse du véhicule automobile déterminée à l'instant t1 et v(t2) est la valeur de la vitesse du véhicule automobile déterminée à l'instant t2.

5. Procédé selon l'une des revendications précédentes,
**caractérisé en ce que,** lors du calcul de la puissance moteur (P), un ou plusieurs des facteurs de correction suivants sont pris en compte :
- facteur de correction corr_{a,rot}, qui représente une accélération des masses en rotation du véhicule automobile,
- facteur de correction corr_{R}, qui représente une résistance au roulement des roues du véhicule automobile,
- facteur de correction corr_{L}, qui représente une résistance à l'air du véhicule automobile,
- facteur de correction corr_{St}, qui représente une résistance à la pente d'une pente de la chaussée empruntée par le véhicule automobile,
- facteur de correction corr_{div}, qui représente des résistances au frottement supplémentaires.

6. Procédé selon l'une des revendications précédentes,
**caractérisé en ce que** le couple de référence moteur (MRM) est estimé (46) de manière répétée, dans lequel des modèles d'état du véhicule automobile sont pris en compte et/ou des algorithmes d'estimation récursifs ou itératifs, par exemple à l'aide du filtre de Kalman, sont utilisés.

7. Procédé selon l'une des revendications précédentes,
**caractérisé en ce que** l'adéquation des instants (t1, t2) est examinée (34) et, si une inadéquation d'un instant (t1, t2) est constatée, la valeur de vitesse de véhicule automobile (v(t1), v(t2)) associée est rejetée ou filtrée.

8. Procédé selon la revendication 7, **caractérisé en ce que** lors de l'examen (34) de l'adéquation des instants (t1, t2), des signaux provenant d'un système de freinage du véhicule automobile, par exemple d'un appareil de commande d'un système antiblocage (ABS) ou d'un système de freinage électronique (EBS), qui indiquent un comportement inadéquat du véhicule automobile, sont pris en compte.

9. Procédé selon la revendication 8, **caractérisé en ce que** les signaux comprennent un signal d'actionnement de frein permettant de signaler un actionnement de frein et/ou un signal d'activation permettant de signaler une activation d'un système antiblocage (ABS).

10. Procédé selon l'une des revendications précédentes, **caractérisé en ce qu'**une résistance à la pente est calculée par le biais d'un capteur d'inclinaison, et le facteur de correction corr_{St}, qui représente la résistance à la pente, est calculé en fonction de la résistance à la pente, et/ou en cas de détection d'une inclinaison à l'aide d'un angle de pente généré par le capteur d'inclinaison en dehors d'une plage prédéterminée, une valeur de vitesse de véhicule automobile déterminée simultanément est exclue ou déclarée comme inadéquate (34).

11. Procédé selon l'une des revendications précédentes,
**caractérisé en ce que** la puissance moteur (P) est calculée de manière répétée en continu, et une valeur maximale (Pmax) de la puissance moteur est déterminée en remplaçant une valeur maximale (Pmax) déjà existante de la puissance moteur par une valeur (Pneu) calculée plus grande de la puissance moteur, pour autant que la valeur (Pneu) calculée plus grande a été évaluée auparavant comme étant fiable.

12. Procédé selon l'une des revendications précédentes, **caractérisé en ce qu'**une information de régime moteur (n_{M}) mesurée ou une information de régime moteur (n_{M}) dérivée d'informations sur un rapport de vitesse engagé (G) et une vitesse de rotation de roue (n_{R}) est utilisée, et le couple de référence moteur est déterminé à partir de l'information de régime moteur (n_{M}) et de la puissance moteur (P).

13. Procédé selon l'une des revendications précédentes, **caractérisé en ce que** le couple de référence moteur (MRM) est estimé de manière répétée en continu, et une valeur maximale (MRM) du couple de référence moteur est déterminée en remplaçant une valeur (MRMalt) déjà existante pour la valeur maximale par une valeur (MRMneu) estimée plus grande du couple de référence moteur, pour autant que la valeur (MRMneu) estimée plus grande a été évaluée comme étant fiable.

14. Dispositif permettant la détermination du couple de référence moteur (MRM) du moteur d'un véhicule automobile, lequel couple de référence moteur est utilisé dans un appareil de commande (60 ; 62) du véhicule automobile,
**caractérisé par**
un calculateur (12) qui calcule une puissance moteur (P', P) du moteur à partir d'une valeur de la masse (m) du véhicule automobile et de valeurs de vitesse de véhicule automobile (v(t1), v(t2)) obtenues pendant une accélération du véhicule automobile à deux instants différents (t1, t2), et
un estimateur (14) qui estime une valeur pour le couple de référence moteur (MRM) à l'aide de la puissance moteur (P', P) calculée, sur la base de courbes de puissance et de couple (16) qui sont enregistrées en fonction du régime (n_{M}) du moteur.

15. Appareil de commande d'un système de freinage d'un véhicule automobile,
**caractérisé par**
un dispositif (10) permettant la détermination du couple de référence moteur (MRM) du moteur du véhicule automobile selon la revendication 14 et/ou des modules matériels et/ou logiciels pour la mise en œuvre des étapes d'un procédé selon l'une des revendications 1 à 13.
